# EUROPÄISCHE PATENTSCHRIFT

(11) **EP 3 704 073 B1**
(45) Veröffentlichungstag und Bekanntmachung des Hinweises auf die Patenterteilung: **02.04.2025**
(21) Anmeldenummer: 18758537.7
(22) Anmeldetag: 11.07.2018
(51) Int. Cl.: C04B 18/00

(54) **VERFAHREN ZUM HERSTELLEN EINES BAUSTOFFGRANULATS AUF BASIS VON MINERALKÖRNERN**
METHOD FOR PRODUCING A BUILDING MATERIAL GRANULATE ON THE BASIS OF MINERAL GRAINS
PROCÉDÉ POUR LA FABRICATION DE GRANULAT DE MATÉRIAUX DE CONSTRUCTION SUR LA BASE DE GRAINS DE MINÉRAUX

(30) Priorität: 17.07.2017 DE 102017006720
(43) Veröffentlichungstag der Anmeldung: 09.09.2020
(73) Patentinhaber: Suspensionsbeton Ltd., 06667 Weißenfels (DE); Dattinger, Stephanie, 81675 München (DE); Dattinger, Florian, 81675 München (DE); HLC Consulting GmbH, 80802 München (DE); Rätzsch, Klaus, 06682 Teuchern (DE)
(72) Erfinder: ROSENLÖCHER, Helmut, 06667 Weißenfels (DE); TRETBAR, Dagmar, 06667 Weißenfels (DE)
(74) Vertreter: Löbl, Stefan
(86) Internationale Anmeldenummer: PCT/DE2018/000213
(87) Internationale Veröffentlichungsnummer: WO 2019/015708

(56) Entgegenhaltungen:
- WO-A1-2016/188559
- CN-A- 105 036 651
- DE-B3- 102014 006 942
- JP-A- H10 311 021

## Beschreibung

Die Erfindung betrifft ein Verfahren zum Herstellen eines Baustoffgranulats auf Basis von Mineralkörnern in Form von Feinsandkörnern und/oder Wüstensandkörnern.

Sand und Kies sind wesentliche Bestandteile von Betonen. Aufgrund der insbesondere in den Schwellenländern wachsenden Baubranche können die notwendigen Mengen an Sand für die Herstellung von Betonen oftmals nicht mehr im ausreichenden Maß zur Verfügung gestellt werden, so dass bereits einige Staaten auf Sand- und Kies-Importe angewiesen sind. Aufgrund der weltweit fehlenden Mengen an geeigneten Sanden für die Herstellung von Betonen rücken bislang ungenutzte Ressourcen wie Wüstensand oder Feinsandüberschüsse immer mehr in den Fokus. Bisher werden die in den Sandfraktionen enthaltenen Feinsandbestandteile weitestgehend abgetrennt und in die Auskiesungsgebiete zurückgespült. Allein in Deutschland beträgt der dadurch bislang nicht genutzte und damit deponierte Feinsandanteil bis zu 40 Millionen Tonnen pro Jahr. Darüber hinaus verursachen die deponierten Feinsandanteile erhebliche Umweltschäden. Die Kornstruktur von Feinsandsanden und Wüstensanden ist durch eine gerundete Geometrie und eine glatte Oberfläche gekennzeichnet. Auf Grund dieser Beschaffenheit sind Feinsande und Wüstensande für die Herstellung von Betonen ungeeignet.

Aus dem Stand der Technik sind Verfahren bekannt, bei denen aus Feinsandanteilen sogenannte Polymerbetone durch Verklebung der einzelnen Sandkörner mit beispielsweise Polyesterharzen, Methylmethacrylharzen, Epoxidharzen oder andere Reaktivharze hergestellt werden. Ein entsprechendes Verfahren ist beispielsweise aus DE 20 2006 012 396 U1 bekannt.

Nach der Lehre von DE 10 2015 114 554 A1 wird Wüstensand mit Wasserglas in Kombination mit Polymerschwefel und mikrokristalliner Kieselerde verfestigt, um daraus Kunstsandsteine herzustellen.

Aus DE 10 2014 006 942 B3 ist ein Verfahren bekannt, bei dem die runde Kornstruktur von Wüstensand durch eine thermischen Behandlung in eine kantige Kornstruktur überführt wird, so dass der Sand dann für die Herstellung von Betonen geeignet ist. DE 32 48 537 C2 offenbart ein Verfahren, bei dem ein für die Betonindustrie verwendbarer Zuschlagstoff durch Sintern von Wüstensand bei Temperaturen von bis zu 1600 °C bereitgestellt wird. Aufgrund der erforderlichen Temperaturen handelt es sich jedoch um ein vergleichsweise kosten- und energieintensives Verfahren, welches für die massenhafte Herstellung von für die Betonindustrie notwendigen Zuschlagstoffen ungeeignet ist.

CN 105 036 651 A beschreibt ein Verfahren zur Herstellung von Beton unter anteiliger Verwendung von unbehandeltem Wüstenstand als Zuschlagstoff.

WO 2016/188559 beschreibt ein Verfahren zur Herstellung eines Polymerbestons mit Wüstensand als Aggregat.

Die der vorliegenden Erfindung zugrundeliegende Aufgabe besteht nunmehr darin, eine kostengünstige Verwendung von Wüstensanden für die Bauindustrie zu ermöglichen.

Erfindungsgemäß wird die Aufgabe mit einem Verfahren nach dem Patentanspruch 1 gelöst. Vorteilhafte Ausgestaltungen und Weiterbildungen der Erfindung können mit in untergeordneten Ansprüchen bezeichneten Merkmalen realisiert werden.

Nach der Konzeption der Erfindung werden Gesteinskörnungen mit glatten oder runden Oberflächen, wie sie bei Wüstensandkörnern und/oder Feinsandkörnern vorkommen, für eine Verwendung in Form eines Baustoffgranulats für die Betonherstellung zugänglich gemacht. Erfindungsgemäß wird dabei eine gebrochene Körnung von Wüstensanden eingesetzt. Eine gebrochene Körnung von Wüstensanden kann vorzugsweise durch Mahlen in einem Mahlwerk erreicht werden. Unter einer gebrochenen Körnung ist im Sinne der Erfindung vornehmlich eine gemahlene Körnung zu verstehen.

Bei dem Baustoffgranulat auf Basis von Mineralkörnern in Form von Wüstensandkörnern, ist ein Anteil einer gebrochenen Körnung von Wüstensand in einer hydraulisch abgebundenen Bindemittelmatrix eingebunden. Durch das Einbinden der gebrochenen Körnung von Wüstensand in einer Bindemittelmatrix können Wüstensand-basierte bereitgestellt werden, die für eine weitere Verarbeitung in der Bauindustrie einsetzbar sind. Vorteilhafterweise ist das Baustoffgranulat in Schüttungen lagerfähig.

Vorteilhafterweise enthält die Bindemittelmatrix mindestens ein hydraulisches Bindemittel wie beispielsweise Zement und/oder mindestens ein latenthydraulisches Bindemittel, welches/welche die Baustoffgranalien im abgebunden Zustand zusammenhält/zusammenhalten und dabei den Anteil der gebrochenen Körnung von Wüstensand in dem Gefüge der Baustoffgranalien einbinden.

Bei dem Baustoffgranulat kann es vorgesehen sein, dass der Anteil der gebrochenen Körnung von Wüstensand ein Kornspektrum bis zu einer Größe von 0,125 mm aufweist.

Die eingesetzten Feinsande können definitionsgemäß Körner mit einer Korngröße zwischen 0 mm und 0,2 mm aufweisen.

Vorteilhafterweise kann das Baustoffgranulat einen Gesamtanteil von unbehandelten Mineralkörnern, das heißt ungebrochenen runden, glatten Mineralkörnern in Form von Feinsandkörnern und/oder Wüstensandkörnern bis zu 50 Masseprozent aufweisen.

Im Gegensatz zu Wüstensanden weisen ungewaschene Feinsande in der Regel Anteile von Körnern mit einer Größe kleiner 0,063 mm auf, was sich vorteilhaft auf die Granulierung auswirkt, da kleinere Korngrößen eine Agglomeration begünstigen.

Es kann daher vorgesehen sein, dass ein Gesamtanteil von bis zu 50 Masseprozent einer ungebrochenen Körnung von Mineralkörnern, die eine ungebrochene Körnung von Wüstensand und/oder eine ungebrochenen Körnung von Feinsand umfasst, in der Bindemittelmatrix des Granulats eingebunden ist.

Vorzugsweise können die Baustoffgranalien des Baustoffgranulats ein Größenspektrum bis zu einem Durchmesser von 16 mm, bevorzugt bis zu einem Durchmesser von 8 mm aufweisen. In Abhängigkeit vom Granulierungsverfahren oder in Abhängigkeit von der Granulieranlage beziehungsweise Pelletieranlage können die Granalien eine im Wesentlichen runde Form oder eine im Wesentlichen zylindrische Form aufweisen. Die erfindungsgemäßen Granalien können auch als Pellets bezeichnet werden.

Bei dem erfindungsgemäßen Verfahren zum Herstellen eines Baustoffgranulats auf Basis von runden, glatten Mineralkörnern in Form von Wüstensandkörnern, wird eine gebrochene Körnung von Wüstensand bereitgestellt. Vorzugsweise kann die gebrochene Körnung von Wüstensand durch Mahlen in einem Mahlwerk bereitgestellt werden. Ein Anteil der gebrochenen Körnung von Wüstensand wird mit einem Anteil eines eine hydraulisch abbindende Bindemittelmatrix bildenden Granulierungsmittels granuliert. Nach dem Granulieren kann ein Trocknungsschritt vorgesehen sein, wobei die erhaltenen Granalien voneinander getrennt trocknen können.

Nach der Konzeption des erfindungsgemäßen Verfahrens werden zunächst runde, glatte Mineralkörner in Form von Wüstensandkörnern gemahlen, wobei eine gebrochene Kornstruktur bereitgestellt wird. Ein Anteil der gebrochenen Körnung von Wüstensand wird sodann mit einem Granulierungsmittel, welches eine hydraulisch abbindende Bindemittelmatrix bildet, gemischt und granuliert, wobei die gebrochenen Wüstensandkörner in Granalien eingebunden werden.

Das Granulieren der Mischung aus einem Anteil der gebrochenen Körnung von Wüstensand und dem Granulierungsmittel kann mittels einer Granulieranlage oder Pelletieranlage erfolgen, wie sie aus dem Stand der Technik bekannt sind.

Vorzugsweise kann ein Kornspektrum der gebrochenen Körnung von Wüstensand mit einer Korngröße bis 0,125 mm eingesetzt werden. Die Korngröße der Wüstensandkörner kann durch das Brechen beziehungsweise Mahlen im Mahlwerk beeinflusst werden.

Gemäß einer vorteilhaften Ausführungsvariante des erfindungsgemäßen Verfahrens wird beim Granulieren eine gebrochene Körnung von Wüstensand mit einer Korngröße von kleiner 1 mm eingesetzt, wobei der Anteil von Körnern kleiner 75 µm mindestens 25 Prozent betragen sollte.

Weiterhin kann es nach einer vorteilhaften Ausführungsvariante des erfindungsgemäßen Verfahrens vorgesehen sein, dass eine ungebrochene Körnung eines Feinsandes, die zu mindestens 30 % aus Körnern mit einer Korngröße kleiner als 1 mm besteht, unmittelbar mit dem Granulierungsmittel granuliert werden. In diesem Fall können geringe Anteile von ungebrochenen Körnern bis zu einer Korngröße von maximal 2 mm granuliert werden.

Gemäß einer Ausführungsvariante des erfindungsgemäßen Verfahren kann es weiter vorgesehen sein, dass das Granulierungsmittel mindestens ein hydraulisches Bindemittel und/oder mindestens ein latent hydraulisches Bindemittel und Wasser umfasst, wobei das mindestens eine hydraulische Bindemittel und/oder das mindestens eine latent hydraulische Bindemittel und das Wasser während der Granulierung separat zugegeben werden. Nach einer bevorzugt einfachen Ausführungsvariante kann als Granulierungsmittel Zement und Wasser eingesetzt werden. Beim Granulieren kann so vorgegangen werden, dass zunächst der Anteil der gebrochenen Körnung von Wüstensand auf einem Granulierteller oder einer Granulierplatte bereitgestellt wird. Anschließend wird der Anteil der gebrochenen Körnung von Wüstensand u mit dem Wasser besprüht und der Anteil Zement hinzugegeben. Durch kreisende Bewegungen des Granuliertellers oder der Granulierplatte werden der Anteil der gebrochenen Körnung von Wüstensand, der Anteil Wasser und der Anteil Zement gemischt und zu Granalien geformt. Nach einem Ausführungsbeispiel kann beim Granulieren ein Anteilsverhältnis von 7 Teilen der gebrochenen Körnung von Wüstensand, 3 Teilen Zement und 1 Teil Wasser eingesetzt werden.

Gemäß einer weiteren vorteilhaften Ausführungsvariante des erfindungsgemäßen Verfahrens kann es vorgesehen sein, dass das Granulierungsmittel eine aus mindestens einem hydraulischen Bindemittel und/oder mindestens einem latent hydraulischen Bindemittel und Wasser gebildete Bindemittelsuspension umfasst, die separat bereitgestellt wird. Bei dieser Ausführungsvariante wird der Anteil der gebrochenen Körnung von Wüstensand mit einer Bindemittelsuspension gemischt und granuliert. Bei der Bindemittelsuspension handelt es sich um eine Mischung aus Wasser und einem hydraulischen Bindemittel, vorzugsweise Zement, die unter Einwirkung von hohen Scherkräften suspendiert wird. Vorteilhafterweise kann ein Anteil des für die Bindemittelsuspension erforderlichen Zements durch ein latent hydraulisches Bindemittel ersetzt sein. Weiterhin kann es vorgesehen sein, dass ein Anteil der gebrochenen Körnung von Wüstensand bis zu einer Korngröße von 0,125 mm bei der Bereitstellung der Bindemittelsuspension eingesetzt wird. Dadurch ist es möglich, einen Anteil der gebrochenen Körnung von Wüstensand als Zementsubstituent bereits in der als Granulierungsmittel vorgesehenen Bindemittelsuspension zu verwerten.

Die Verwendung der in Hochleistungsmischern bereitgestellten Bindemittelsuspension als Granulierungsmittel hat den Vorteil, dass eine besonders hohe Homogenität erreicht wird, was positive Auswirkungen auf die Vereinheitlichung der Qualitätsparameter, wie Druckfestigkeit, Kornspektrum und Oberflächenbeschaffenheit der hergestellten Granulate hat.

Vorteilhafterweise kann die Qualität der hergestellten Granulate durch Variation der Zusammensetzung des Granulierungsmittels erreicht werden. Somit können Qualitätsänderungen oder Qualitätsanpassungen über das übliche Maß der nach dem Stand der Technik bekannten Möglichkeiten einer Änderung technologischer Parameter bei Granulieranlagen, wie beispielsweise die Verweilzeit, Umdrehungsgeschwindigkeiten oder Temperatur, vorgenommen werden.

Weiterhin kann es nach dem erfindungsgemäßen Verfahren vorgesehen sein, dass beim Granulieren mindestens ein Zusatzmittel eingesetzt wird, welches ausgewählt ist aus einer Gruppe umfassend: ein Fließmittel, ein Betonverflüssiger, ein Luftporenbildner, ein Erstarrungsbeschleuniger, ein Stabilisierungsmittel, ein Dichtungsmittel. Das mindestens eine Zusatzmittel kann beim Granulieren separat zugemischt werden oder der separat bereitgestellten Bindemittelsuspension des Granulierungsmittels zugemischt sein.

Es hat sich gezeigt, dass bei einer Zumischung einer ungebrochenen Körnung von Mineralkörnern, die eine ungebrochene Körnung von Wüstensand und/oder eine ungebrochene Körnung von Feinsand umfasst, bis zu einem Verhältnis von 50 Masseprozent nach dem erfindungsgemäßen Verfahren stabile Granalien bereitgestellt werden können, die sich als Schüttgut zur Bodenverdichtung oder als Zuschlagstoff bei der Betonherstellung eignen. Es kann daher vorgesehen sein, dass beim Granulieren zusätzlich ein Anteil einer ungebrochenen Körnung von Mineralkörnern, die eine ungebrochene Körnung von Wüstensand und/oder eine ungebrochene Körnung von Feinsand umfasst, bis zu einem Gesamtanteil 50 Masseprozent eingesetzt wird.

Die Erfindung betrifft ein Verfahren zum Herstellen eines Baustoffgranulats auf Basis von Mineralkörnern in Form von Wüstensandkörnern, bei dem eine gebrochene Körnung von Wüstensand bereitgestellt wird und ein Anteil der gebrochenen Körnung von Wüstensand mit einem Anteil eines eine hydraulisch abbindende Bindemittelmatrix bildenden Granulierungsmittels granuliert wird.

## Patentansprüche

1. Verfahren zum Herstellen eines Baustoffgranulats auf Basis von Mineralkörnern in Form von Wüstensandkörnern, bei dem eine gebrochene Körnung von Wüstensand bereitgestellt wird und ein Anteil der gebrochenen Körnung von Wüstensand mit einem Anteil eines eine hydraulisch abbindende Bindemittelmatrix bildenden Granulierungsmittels granuliert wird.

2. Verfahren nach Anspruch 1, **dadurch gekennzeichnet, dass** die gebrochene Körnung von Wüstensand durch Mahlen in einem Mahlwerk bereitgestellt wird.

3. Verfahren nach einem der Ansprüche 1 oder 2, **dadurch gekennzeichnet, dass** ein Kornspektrum der gebrochenen Körnung von Wüstensand mit einer Korngröße bis 0,125 mm eingesetzt wird.

4. Verfahren nach einem der Ansprüche 1 bis 3, **dadurch gekennzeichnet, dass** das Granulierungsmittel mindestens ein hydraulisches Bindemittel und/oder mindestens ein latent hydraulisches Bindemittel und Wasser umfasst, wobei das mindestens eine hydraulische Bindemittel und/oder das mindestens eine latent hydraulische Bindemittel und das Wasser während der Granulierung separat zugeben werden.

5. Verfahren nach einem der Ansprüche 1 bis 3, **dadurch gekennzeichnet, dass** das Granulierungsmittel eine aus mindestens einem hydraulischen Bindemittel und/oder mindestens einem latent hydraulischen Bindemittel und Wasser gebildete Bindemittelsuspension umfasst, die separat bereitgestellt wird.

6. Verfahren nach einem der Ansprüche 1 bis 5, **dadurch gekennzeichnet, dass** beim Granulieren mindestens ein Zusatzmittel eingesetzt wird, welches ausgewählt ist aus einer Gruppe umfassend: ein Fließmittel, ein Betonverflüssiger, ein Luftporenbildner, ein Erstarrungsbeschleuniger, ein Stabilisierungsmittel, ein Dichtungsmittel.

7. Verfahren nach einem der Ansprüche 1 bis 6, **dadurch gekennzeichnet, dass** beim Granulieren zusätzlich ein Anteil einer ungebrochenen Körnung von Mineralkörnern, die eine ungebrochene Körnung von Wüstensand und/oder eine ungebrochene Körnung von Feinsand umfasst, bis zu einem Gesamtanteil von 50 Masseprozent eingesetzt wird.

## Claims

1. A method for producing a granulated building material based on mineral grains in the form of desert sand grains, wherein a broken graining of desert sand is provided and a fraction of the broken graining of desert sand is granulated with a fraction of a granulation means forming a hydraulically binding binder matrix.

2. The method according to claim 1, **characterised in that** the broken graining of desert sand is provided by grinding in a grinder.

3. The method according to any one of claims 1 or 2, **characterised in that** a grain spectrum of the broken graining of desert sand with a grain size of up to 0.125 mm is employed.

4. The method according to any one of claims 1 to 3, **characterised in that** the granulation means comprises at least one hydraulic binder and/or at least one latent hydraulic binder and water, wherein the at least one hydraulic binder and/or the at least one latent hydraulic binder and the water are added separately during granulation.

5. The method according to any one of claims 1 to 3, **characterised in that** the granulation means comprises a binder suspension formed from at least one hydraulic binder and/or at least one latent hydraulic binder and water which is provided separately.

6. The method according to any one of claims 1 to 5, **characterised in that** during granulation, at least one additive is employed, which is selected from a group, comprising: a flow agent, a concrete liquefier, an air-entraining agent, a solidification accelerator, a stabilisation agent, a sealing agent.

7. The method according to any one of claims 1 to 6, **characterised in that** during granulation, a fraction of an unbroken graining of mineral grains, which comprises an unbroken graining of desert sand and/or an unbroken graining of fine sand, up to a total fraction of 50 percent by mass is additionally employed.

## Revendications

1. Procédé de fabrication d'un granulat de matériau de construction à base de grains minéraux sous forme de grains de sable de désert, dans lequel une granulation concassée de sable de désert est fournie et une part de la granulation concassée de sable de désert est granulée avec une part d'un agent de granulation formant une matrice de liant à prise hydraulique.

2. Procédé selon la revendication 1, **caractérisé en ce que** la granulation concassée de sable de désert est fournie par broyage dans un broyeur.

3. Procédé selon l'une des revendications 1 ou 2, **caractérisé en ce qu'**un spectre granulométrique de la granulométrie concassée de sable de désert ayant une taille de grain allant jusqu'à 0,125 mm est utilisé.

4. Procédé selon l'une des revendications 1 à 3, **caractérisé en ce que** l'agent de granulation comprend au moins un liant à prise hydraulique et/ou au moins un liant à prise hydraulique latent et de l'eau, ledit au moins un liant à prise hydraulique et/ou ledit au moins un liant à prise hydraulique latent et ladite eau étant ajoutés séparément pendant la granulation.

5. Procédé selon l'une des revendications 1 à 3, **caractérisé en ce que** l'agent de granulation comprend une suspension de liant formée d'au moins un liant à prise hydraulique et/ou d'au moins un liant à prise hydraulique latent et d'eau, qui est fournie séparément.

6. Procédé selon l'une des revendications 1 à 5, **caractérisé en ce que**, lors de la granulation, au moins un adjuvant est utilisé, ce dernier est choisi dans un groupe comprenant : un superplastifiant, un fluidifiant du béton, un entraîneur d'air, un accélérateur de prise, un agent stabilisant, un agent d'étanchéité.

7. Procédé selon l'une des revendications 1 à 6, **caractérisé en ce que**, lors de la granulation, une part d'une granulation non concassée de grains minéraux, comprenant une granulation non concassée de sable de désert et/ou une granulation non concassée de sable fin est également utilisée jusqu'à une proportion totale de 50 pour cent en masse.
